# EUROPEAN PATENT APPLICATION

(11) **EP 4 266 813 A1**
(43) Date of publication of application: **25.10.2023**
(21) Application number: 23167318.7
(22) Date of filing: 11.04.2023
(51) Int. Cl.: H04W 76/15, H04W 84/12

(54) **WIRELESS COMMUNICATION METHOD FOR TRANSMITTING BEACON FRAME HAVING NON-INHERITANCE ELEMENT**

(30) Priority: 22.04.2022 US 202263333588 P; 30.03.2023 US 202318129052
(71) Applicant: MediaTek Inc., Hsin-Chu 300 (TW)
(72) Inventor: HSU, Chien-Fang, 30078 Hsinchu City (TW); YANG, Hao-Liang, 30078 Hsinchu City (TW)
(74) Representative: Hoefer & Partner Patentanwälte mbB

(57) **Abstract**

The present invention provides a wireless communication method of an electronic device, wherein the wireless communication method includes the steps of: establishing at least a first link and a second link with other devices (502); transmitting a frame via the first link, wherein the frame comprises a non-inheritance element comprising at least one element identity with at least one identifier of the second link that is not inherited from the first link (506) .

## Description

### Cross Reference to Related Applications

This application claims the benefit of U.S. Provisional Application No. 63/333,588, filed on April 22nd, 2022. The content of the application is incorporated herein by reference.

### Background

A Wi-Fi specification defines a multi-link element (MLE) to report/describe multiple wireless stations (STA) of a multi-link device (MLD), that is a reporting STA can transmit a beacon frame including the MLE carrying a profile of a reported STA which is affiliated with the same MLD. In order to reduce the size of a beacon frame carrying the profiles of the reporting STA and reported STA(s), some elements corresponding to the reported STA can be inherited from the reporting STA, and the elements that cannot be inherited from the reporting STA are listed in a non-inheritance element, so that the beacon frame can only comprise the profile of the reporting STA and the elements of the reported STA that cannot be inherited from the reporting STA.

Currently, the non-inheritance element uses element identity (ID) and element ID extension as the element's unique identity. However, this design cannot apply for specific elements such as a vendor specific element having extra identifier(s) with variable length.

### Summary

It is therefore an objective of the present invention to provide a wireless communication method, which can transmit a beacon frame including information capable of identifying the elements with the same element ID and/or the same element ID extension, to solve the above-mentioned problems. A wireless communication method and a wireless communication circuit according to the invention are defined in the independent claims. The dependent claims define preferred embodiments thereof.

According to one embodiment of the present invention, a wireless communication method of an electronic device comprises the steps of: establishing at least a first link and a second link with other devices; transmitting a frame via the first link, wherein the frame comprises a non-inheritance element comprising at least one element identity with at least one identifier of the second link that is not inherited from the first link.

According to one embodiment of the present invention, a wireless communication circuit of an electronic device is configured to perform the steps of: establishing at least a first link and a second link with other devices; transmitting a frame via the first link, wherein the frame comprises a non-inheritance element comprising at least one element identity with at least one identifier of the second link that is not inherited from the first link.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a wireless communication system according to one embodiment of the present invention.
FIG. 2A is a diagram illustrating a non-inheritance element within the beacon frame according to a first embodiment of the present invention.
FIG. 2B is a diagram illustrating the element identifier list according to one embodiment of the present invention.
FIG. 3 is a diagram illustrating a non-inheritance element within the beacon frame according to a second embodiment of the present invention.
FIG. 4 is a diagram illustrating a non-inheritance element within the beacon frame according to a third embodiment of the present invention.
FIG. 5 is a flowchart of a wireless communication method of an electronic device according to one embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

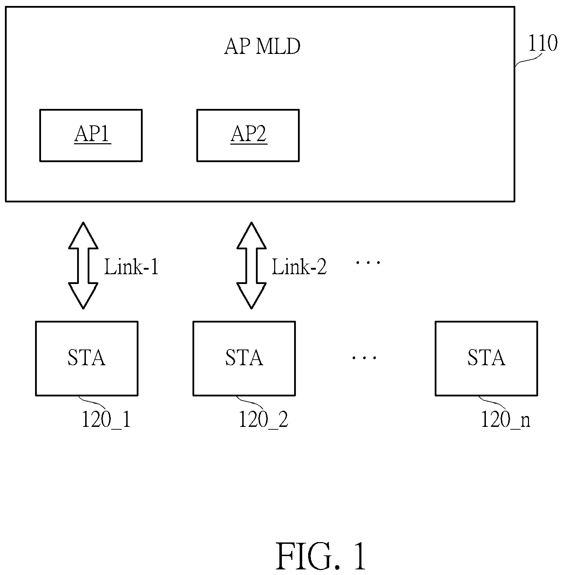

FIG. 1 is a diagram illustrating a wireless communication system according to one embodiment of the present invention. As shown in FIG. 1, the wireless communication system comprises an access point (AP) multi-link device (MLD) 110 and a plurality of stations 120_1 - 120_n, wherein the AP MLD 110 comprises a plurality of access points such as AP1 and AP2, and the access points AP1 and AP2 are implemented by a processor and a wireless communication circuit. In this embodiment, each of the stations 120_1 - 120_n can be a cell phone, a tablet, a notebook, or any other electronic device capable of wirelessly communicating with the AP MLD 110, and the AP MLD 110 supports multiple link operations that can communicate with other devices by using two or more links.

In this embodiment, the wireless communication circuit of the AP MLD 110 may have two or more media access control (MAC) layer circuits and physical layer circuits for establishing the two or more links. FIG. 1 shows two links Link-1 and Link-2 for the following description, but the number of links shown in FIG. 1 is not a limitation of the present invention. In this embodiment, the Link-1 may use a channel corresponding to a 2.4GHz band (e.g., 2.412GHz - 2.484GHz), a 5GHz band (e.g., 4.915GHz - 5.825GHz) or a 6GHz band (e.g., 5.925GHz - 7.125GHz); and the Link-2 may also use a channel corresponding to the 2.4GHz band, the 5GHz band or the 6GHz band. For each of the stations 120_1 - 120_n, the station can use one or more links to communicate with the AP MLD 110. For example, the station 120_1 may use only one link such as Link-1 to communicate with the AP MLD 110, and the station 120_2 may use both the Link-1 and Link-2 to communicate with the AP MLD 110.

The APMLD 110 may periodically transmit a beacon frame defined in IEEE 802.11 to the other devices in an infrastructure basic service set (BSS), wherein the beacon frame comprises information of the network. In this embodiment, the beacon frame transmitted via one link comprises information of all the links of the AP MLD 110. For example, the beacon frame transmitted by the AP MLD 110 via the Link-1 comprises profile of the Link-1 and profile of the Link-2. In order to reduce the size of the beacon frame carrying the profiles of the Link-1 and Link-2, some elements corresponding to the Link-2 can be inherited from the elements corresponding to the Link-1, and the elements that cannot be inherited from the Link-1 are listed in a non-inheritance element within the beacon frame.

In Another feature in IEEE 802.11 for high-efficiency wireless networks, non-inheritance element can also apply for multiple BSSIDs element. Using the Multiple BSSID element can save the AP from transmitting a beacon frame per SSID, reducing beacon overhead when using virtual APs. The multiple BSSID element allows an AP to collapse information for collocated networks running on the same Wi-Fi channel into a single beacon or probe response frame. The virtual APs have their non-transmitted BSSIDs. The Non-Inheritance element identifies one or more elements that are not inherited by the non-transmitted BSSID from the BSSID of the AP transmitting beacons or probes.

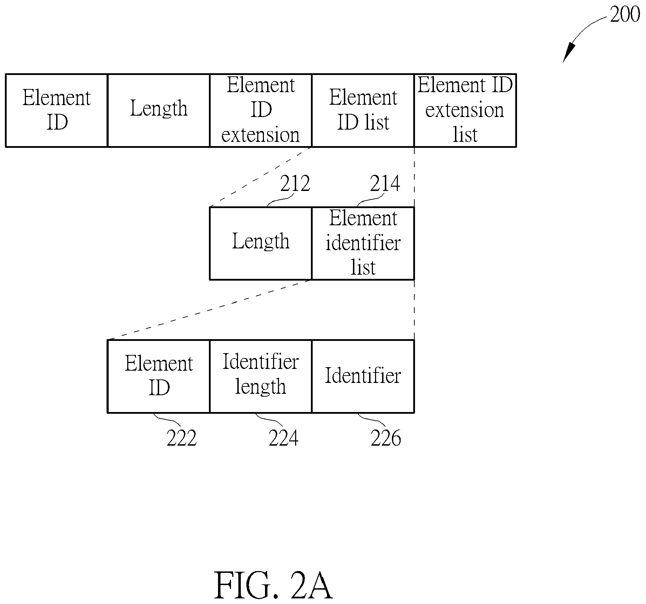

FIG. 2A is a diagram illustrating a non-inheritance element 200 within a beacon frame according to a first embodiment of the present invention, wherein the non-inheritance element 200 is used to identify one or more elements of the Link-2 that are not inherited from the Link-1, and the frame may be a beacon frame, or a probe response frame that is to respond a probe request from a station. Hereinafter, the beacon frame serves as the frame in the following description. As shown in FIG. 2A, the non-inheritance element 200 within the frame comprises five fields, wherein a first field records an element ID, a second field records a length of the non-inheritance element 200, a third field records an element ID extension, a fourth field records an element ID list, and a fifth field records an element ID extension list. In this embodiment, the element ID and the element ID extension corresponding to the non-inheritance element 200 can be set according to the related specification, for example, the element ID may be "255", and/or the element ID extension may be "56". The element ID list records the element (s) that is/are not inherited from the Link-1. Specifically, the element ID list comprises two subfields 212 and 214, wherein the subfield 214 records an element identifier list, and the subfield 212 records a length of the element identifier list (i.e., how many elements and element(s) with identifier). The subfield 214 may record more than one element ID, and each of the element IDs corresponds to three subfields 222, 224 and 226, wherein the subfield 222 records the element ID, the subfield 226 records the identifier(s) corresponding to the element ID recorded in the subfield 222, and the subfield 224 records an identifier length indicating how many identifier (s) in the subfield 226. It is noted that if the element ID does not have any identifier, the subfield 226 can be empty or invalid data, and the identifier length of the subfield 224 is zero.

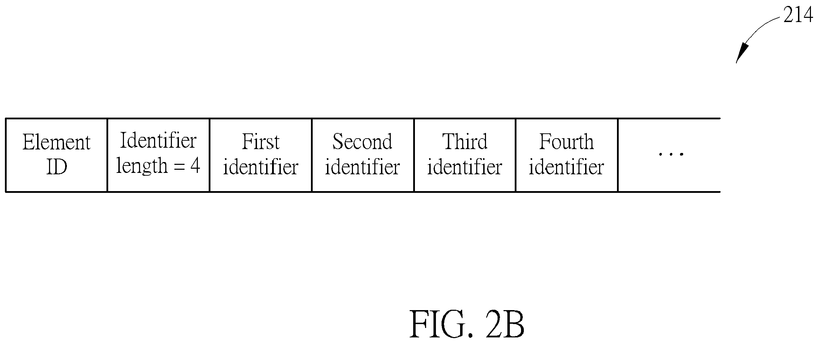

FIG. 2B is a diagram illustrating the subfield 214 according to one embodiment of the present invention. In FIG. 2B, the element identifier list sequentially comprises an element ID, an identifier length equal to four, a first identifier, a second identifier, a third identifier and a fourth identifier that specify different contents. In addition, if the element identifier list further records another element ID, the other element and associated identifier length and identifier(s) are positioned after the fourth identifier corresponding to the previous element ID shown in FIG. 2B.

In this embodiment, if the element ID list of the non-inheritance element 200 comprises a vendor specific element (e.g., element ID = 221), the vendor specific element may further have one or more identifiers, wherein part of these identifiers may be inherited from the Link-1, and part of the identifiers may not be inherited from the Link-1. Therefore, by using the non-inheritance element 200 shown in FIG. 2A, the same element ID with the identifier(s) that cannot be inherited from the Link-1 can be recorded for reference by other devices. It is to be noted that, in this example, the different identifiers under the same vendor specific element (e.g., with the same element ID) would carry different information contents that can be recognized by the receiving end.

In one implementation, the subfields 212, 214 and the subfields 222, 224 and 226 can also be applied to the element ID extension list of the non-inheritance element 200. That is, the element ID extension list comprises two subfields, wherein one subfield records an element identifier list, and the other subfield records a length of the element identifier list. In addition, the element identifier list comprises three subfields recording an element ID extension, an identifier length and identifier(s), respectively.

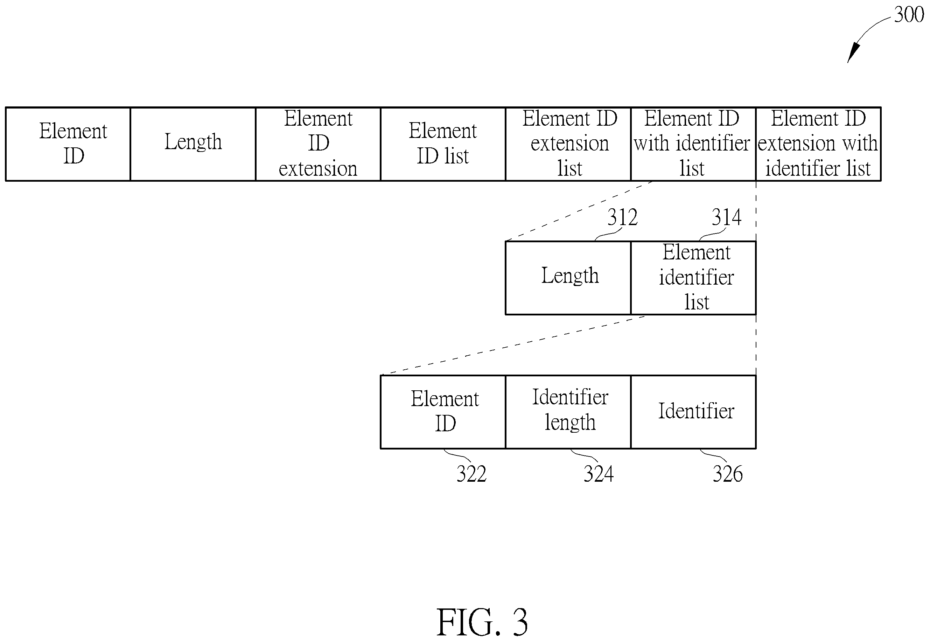

FIG. 3 is a diagram illustrating a non-inheritance element 300 within the beacon frame according to a second embodiment of the present invention, wherein the non-inheritance element 300 is used to identify one or more elements of the Link-2 that are not inherited from the Link-1. As shown in FIG. 3, the non-inheritance element 300 within the beacon frame comprises seven fields, wherein a first field records an element ID, a second field records a length of the non-inheritance element 300, a third field records an element ID extension, a fourth field records an element ID list, a fifth field records an element ID extension list, a sixth field records an element ID with identifier list, and a seventh field records an element ID extension with identifier list. In this embodiment, the element ID and the element ID extension corresponding to the non-inheritance element 200 can be set according to the related specification, for example, the element ID may be "255", and/or the element ID extension may be "56". The element ID list of the fourth field records the element(s) that is/are inherited from the Link-1, and the element ID extension list of the fifth field records the element(s) that is/are inherited from the Link-1, wherein the element IDs of recorded in the fourth field and the fifth field do not have extra identifier.

The element ID with identifier list records the element(s) with extra identifier that is/are not inherited from the Link-1. Specifically, the element ID with identifier list comprises two subfields 312 and 314, wherein the subfield 314 records an element identifier list, and the subfield 312 records a length of the element identifier list (i.e., how many element(s) with identifier). The subfield 314 may record more element IDs, and each of the element IDs corresponds to three subfields 322, 324 and 326, wherein the subfield 322 records the element ID, the subfield 326 records the identifier(s) corresponding to the element ID recorded in the subfield 322, and the subfield 324 records an identifier length indicating how many identifier(s) in the subfield 326.

In one implementation, the subfields 312, 314 and the subfields 322, 324 and 326 can also be applied to the element ID extension with identifier list of the non-inheritance element 300. That is, the element ID extension with identifier list comprises two subfields, wherein one subfield records an element identifier list, and the other subfield records a length of the element identifier list. In addition, the element identifier list comprises three subfields recording an element ID extension, an identifier length and identifier(s), respectively.

In this implementation, if the element ID list of the non-inheritance element 300 comprises a vendor specific element (e.g., element ID = 221), the vendor specific element may further have one or more identifiers, wherein part of these identifiers may be inherited from the Link-1, and part of the identifiers may not be inherited from the Link-1. Therefore, by using the non-inheritance element 300 shown in FIG. 3, the same element ID with the identifier (s) that cannot be inherited from the Link-1 can be recorded for reference by other devices.

In one implementation, the element ID list of the fourth field may comprise an element ID that has extra identifier, but the extra identifier may not be recorded in this field. Specifically, if the vendor specific element have one or more identifiers, the element ID list of the fourth field may only record an element ID of the vendor specific element (i.e., element ID = 221), while the element ID with identifier list of the sixth field record the element ID of the vendor specific element with extra identifier(s) (i.e., element ID = 221, and identifier = XX) that is/are not inherited from the Link-1.

The contents of first field to fifth field of the non-inheritance element 300 are defined in the specification of the wireless communication, so a legacy device that cannot identify the element ID with the identifier(s) of the sixth field can directly ignore the contents of sixth field and the seventh field of the non-inheritance element 300. That is, the non-inheritance element 300 can be backward compatible to the legacy device, and the legacy device can identify the non-inheritance element 300.

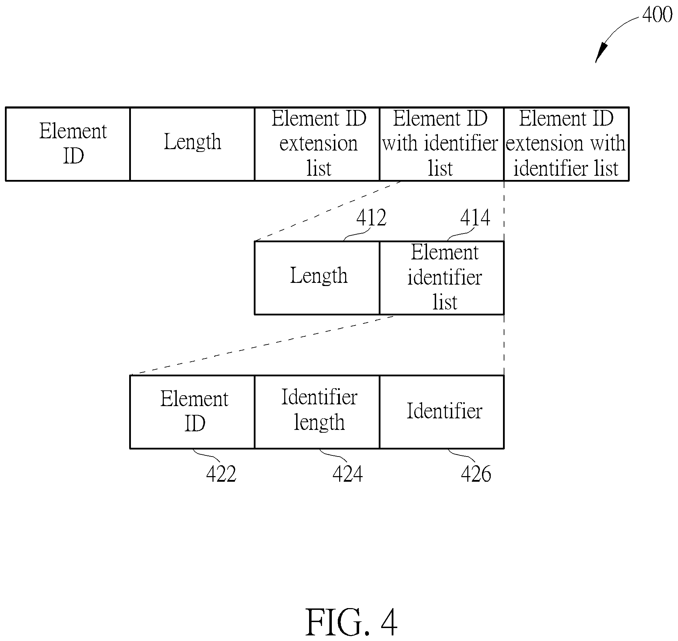

FIG. 4 is a diagram illustrating a non-inheritance element 400 within the beacon frame according to a third embodiment of the present invention, wherein the non-inheritance element 400 is used to identify one or more elements with identifier of the Link-2 that are not inherited from the Link-1. It is noted that the beacon frame already has one non-inheritance element that records elements that are not inherited from the Link-1, and the non-inheritance element 400 serves as a non-inheritance extension element that only records element (s) with identifier that is/are not inherited from the Link-1. As shown in FIG. 4, the non-inheritance element 400 within the beacon frame comprises five fields, wherein a first field records an element ID, a second field records a length of the non-inheritance element 400, a third field records an element ID extension, a fourth field records an element ID with identifier list, and a fifth field records an element ID extension with identifier list. In this embodiment, the conventional non-inheritance element has the element ID "255" and/or the element ID extension "56", and the non-inheritance element 400 has different element ID and/or element ID extension.

The element ID with identifier list records the element(s) with extra identifier that is/are not inherited from the Link-1. Specifically, the element ID with identifier list comprises two subfields 412 and 414, wherein the subfield 414 records an element identifier list, and the subfield 412 records a length of the element identifier list (i.e., how many element(s) with identifier). The subfield 414 may record more element IDs, and each of the element IDs corresponds to three subfields 422, 424 and 426, wherein the subfield 422 records the element ID, the subfield 426 records the identifier(s) corresponding to the element ID recorded in the subfield 422, and the subfield 424 records an identifier length indicating how many identifier(s) in the subfield 426.

In one implementation, the subfields 412, 414 and the subfields 422, 424 and 426 can also be applied to the element ID extension with identifier list of the non-inheritance element 400. That is, the element ID extension with identifier list comprises two subfields, wherein one subfield records an element identifier list, and the other subfield records a length of the element identifier list. In addition, the element identifier list comprises three subfields recording an element ID extension, an identifier length and identifier(s), respectively.

In this implementation, if the element ID list of the non-inheritance element 400 comprises a vendor specific element (e.g., element ID = 221), the vendor specific element may further have one or more identifiers, wherein part of these identifiers may be inherited from the Link-1, and part of the identifiers may not be inherited from the Link-1. Therefore, by using the non-inheritance element 400 shown in FIG. 4, the same element ID with the identifier (s) that cannot be inherited from the Link-1 can be recorded for reference by other devices.

Because the non-inheritance element 400 serves as the non-inheritance extension element, and the beacon frame comprises a conventional non-inheritance element, a legacy device can directly ignore the non-inheritance element 400 if the legacy device cannot identify the contents of the non-inheritance element 400. That is, the non-inheritance element 400 does not affect a normal operation of the legacy device.

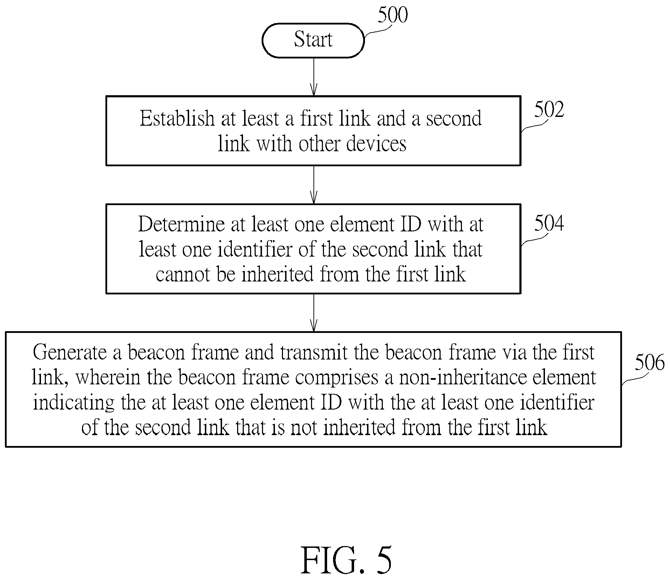

FIG. 5 is a flowchart of a wireless communication method of an electronic device according to one embodiment of the present invention. Referring to the above embodiments, the flow is described as follows.

Step 500: the flow starts.

Step 502: establish at least a first link and a second link with other devices.

Step 504: determine at least one element ID with at least one identifier of the second link that cannot be inherited from the first link/

Step 506: generate a beacon frame and transmit the beacon frame via the first link, wherein the beacon frame comprises a non-inheritance element indicating the at least one element ID with the at least one identifier of the second link that is not inherited from the first link.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A wireless communication method of an electronic device, comprising:
establishing at least a first link and a second link with other devices (502);
transmitting a frame via the first link (506), wherein the frame comprises a non-inheritance element comprising at least one element identity, in the following also referred to as ID, with at least one identifier of the second link that is not inherited from the first link.

2. The wireless communication method of claim 1, wherein the non-inheritance element comprises a plurality of fields, and one of the fields records an element ID list; the element ID list comprises an element identifier list comprising a plurality sets of identifiers, one of the plurality sets of identifiers comprising the at least one identifier, wherein the one set of plurality sets of identifiers specify different contents under the same at least one element ID.

3. The wireless communication method of claim 2, wherein the one of the fields has at least one first subfield, wherein the at least one first subfield indicates the element identifier list; and the element identifier list comprises a plurality of second subfields, wherein one of the second subfield indicates the element ID, another one of the second subfields indicates the at least one identifier corresponding to the element ID, and yet another one of the second subfields indicates an identifier length indicating an amount of identifier(s) corresponding to the element ID.

4. The wireless communication method of claim 2 or 3, wherein the one of the fields has two first subfields, one of the first subfields indicates the element identifier list, and the other one of the first subfield comprises a length of the element identifier list.

5. The wireless communication method of claim 2, wherein the at least one element ID corresponds to a specific element.

6. The wireless communication method of claim 1, wherein the non-inheritance element comprises a plurality of fields, and one of the fields indicates an element ID list, and another one of the fields records an element ID with identifier list; the element ID list comprises at least one element ID with no identifier of the second link that is not inherited from the first link, and the element ID with identifier list comprises the at least one element ID with the at least one identifier of the second link that is not inherited from the first link.

7. The wireless communication method of claim 6, wherein the another one of the fields has at least one first subfield, wherein the at least one first subfield indicates the element identifier list; and the element identifier list comprises a plurality of second subfields, wherein one of the second subfields indicates the element ID, another one of the second subfields indicates the at least one identifier corresponding to the element ID, and yet another one of the subfields indicates an identifier length indicating an amount of identifier(s) corresponding to the element ID.

8. The wireless communication method of claim 6 or 7, wherein the one of the fields has two first subfields, one of the first subfields indicates the element identifier list, and the other one of the first subfield comprises a length of the element identifier list.

9. The wireless communication method of any one of claims 6 to 8, wherein the non-inheritance element comprises at least six fields in sequence, a first field records an element ID, a second field records a length of the non-inheritance element, a third field records an element ID extension, a fourth field records the element ID list, a fifth field records an element ID extension list, and a sixth field records the element ID with identifier list.

10. The wireless communication method of any one of claims 6 to 9, wherein the at least one element ID with the at least one identifier corresponds to a specific element.

11. The wireless communication method of claim 10, wherein the element ID list further comprises the element ID corresponding to the specific element, but the element ID list does not record the at least one identifier of the specific element.

12. The wireless communication method of claim 1, wherein the non-inheritance element comprises a plurality of fields, and one of the fields records element ID with identifier list; and the element ID with identifier list comprises the at least one element ID with the at least one identifier of the second link that is not inherited from the first link.

13. The wireless communication method of claim 12, wherein the one of the fields has at least one first subfield, wherein the at least one first subfield indicates the element identifier list; and the element identifier list comprises a plurality of second subfields, wherein one of the second subfield indicates the element ID, another one of the second subfields indicates the at least one identifier corresponding to the element ID, and yet another one of the subfields indicates an identifier length indicating an amount of identifier(s) corresponding to the element ID.

14. The wireless communication method of claim 12 or 13, wherein the at least one element ID corresponds to a specific element.

15. A wireless communication circuit of an electronic device, configured to perform the method steps defined in any one of the preceding claims.
